# EUROPEAN PATENT SPECIFICATION

(11) **EP 3 085 734 B1**
(45) Date of publication and mention of the grant of the patent: **16.08.2023**
(21) Application number: 15792603.1
(22) Date of filing: 22.04.2015
(51) Int. Cl.: C08L 9/06, B60C 1/00, C08K 3/04, C08K 3/22, C08K 3/30, C08K 3/34, C08K 5/11

(54) **RUBBER COMPOSITION AND PNEUMATIC TIRE**
KAUTSCHUKZUSAMMENSETZUNG UND LUFTREIFEN
COMPOSITION DE CAOUTCHOUC ET PNEU

(30) Priority: 15.05.2014 JP 2014101567
(43) Date of publication of application: 26.10.2016
(73) Proprietor: Sumitomo Rubber Industries, Ltd., Kobe-shi, Hyogo 651-0072 (JP)
(72) Inventor: MIYAZAKI, Tatsuya, Hyogo 651-0072 (JP)
(74) Representative: TBK
(86) International application number: PCT/JP2015/062222
(87) International publication number: WO 2015/174229

(56) References cited:
- EP-A1- 0 697 432
- EP-A1- 1 112 961
- EP-A1- 2 944 669
- EP-A1- 3 165 566
- EP-A1- 3 178 877
- WO-A1-2014/178336
- JP-A- H1 059 713
- JP-A- 2000 281 833
- JP-A- 2001 181 447
- JP-A- 2015 013 974

## Description

### TECHNICAL FIELD

The present invention relates to a rubber composition and a pneumatic tire including a tread formed from the rubber composition.

### BACKGROUND ART

Pneumatic tires are made of a number of different components, including the tread and sidewall. These components impart their respective properties to the pneumatic tires. The tread, which makes contact with the road surface, needs to have wet grip performance and other properties for safety and the like. A method has been proposed which improves these properties by addition of aluminum hydroxide. Unfortunately, this method deteriorates abrasion resistance or abrasion appearance (i.e. grainy peaks like waves) after abrasion and is therefore rarely applied to tires for general public roads.

The deterioration of abrasion appearance after abrasion, specifically, the formation of taller wave-like grainy peaks (ripples), indicates that the rubber has been subjected to excessive tearing or tension during running. In this case, a decrease in abrasion index is usually observed.

Other methods include a method of increasing the styrene content or the vinyl content in solution-polymerized styrene-butadiene rubber, a method of using a modified solution-polymerized styrene-butadiene rubber to control the tanδ curve, a method of increasing the amount of silica to provide a higher tanδ peak, and a method of adding a grip resin. At present, it is still difficult to improve wet grip performance while maintaining other physical properties.

Patent Literature 1 discloses the use of a specific rubber component and a specific inorganic filler such as aluminum hydroxide to improve wet grip performance, abrasion resistance, and processability. However, there is still room for improvement in achieving both wet grip performance and abrasion resistance, and a need exists for a balanced improvement in the properties further including abrasion appearance after abrasion.

EP 0 697 432 A1 relates to rubber compositions for tire treads containing a rubber component containing at least 70 parts by weight of a styrene-butadiene rubber whose styrene content is 20 to 60%; and, based on 100 parts by weight of the rubber component, 5 to 150 parts by weight of a powdery inorganic compound represented by formula (I) and having a particle size from 0.01 to 10 µm: mM¹.xSiO_{y}.zH₂O (I), in which M¹ is at least one selected from the group consisting of Al, Mg, Ti, and Ca; any oxide of any one of the metals; or any hydroxide of any one of the metals; and m, x, y, and z are integers from 1 to 5, 0 to 10, 2 to 5, and 0 to 10, respectively; and 5 to 170 parts by weight of carbon black having a nitrogen adsorption specific area of 80 to 280 m²/g so that the total amount of the powdery inorganic compound and the carbon black falls in the range of 70 to 200 parts by weight.

EP 1 112 961 A1 relates to a tyre tread rubber composition and a pneumatic tyre employing aluminium hydroxide having a loosed bulk density of not more than 0.60g/cm³, a DOP oil absorption of 70cm³/100g to 250cm³/100g, and a BET specific surface area of 30m²/g to 50m²/g, wherein 5-150 parts by weight of the aluminium hydroxide is blended with 100 parts by weight of a rubber component and wherein the rubber component may include at least 60 parts by weight of styrene-butadiene rubber having a styrene content of 20-60% by weight.

EP 2 944 669 A1 (Art. 54(3) EPC) relates to a rubber composition, containing a rubber component made of an oil-extended butadiene rubber having a cis content of 95 mol% or greater, a vinyl content of 1.2 mol% or less and a weight-average molecular weight of 530,000 or greater, and/or a styrene-butadiene rubber having a bound styrene content of 10~60 mass% and a weight-average molecular weight of 800,000 or greater; an inorganic reinforcement agent represented by a specific formula and having a nitrogen adsorption specific surface area of 10~60 m²/g or greater; and silica having a nitrogen adsorption specific surface area of 100 m²/g or greater and/or carbon black having a nitrogen adsorption specific surface area of 100 m²/g or greater.

EP 3 165 566 A1 (Art. 54(3) EPC) relates to a rubber composition for treads containing: a diene rubber including styrene-butadiene rubber; at least one softener selected from the group consisting of low temperature plasticizers, process oils, and resins having a softening point of 160°C or lower; zinc dithiophosphate; and sulfur, wherein, per 100 parts by mass of the diene rubber, there are 40 parts by mass or more of the softener, 0.2-15 parts by mass of the zinc dithiophosphate, and less than 2.5 parts by mass of zinc oxide.

EP 3 178 877 A1 relates to a rubber composition containing: a diene rubber including styrene-butadiene rubber; zinc dithiophosphate; an inorganic filler including at least one selected from the group consisting of: a compound of the formula: mM ·xSiO_{y} ·zH₂O wherein M represents at least one metal selected from the group consisting of Al, Mg, Ti, Ca, and Zr, or an oxide or hydroxide of the metal, m represents an integer of 1-5, x represents an integer of 0-10, y represents an integer of 2-5, and z represents an integer of 0-10; magnesium sulfate; and silicon carbide, and having a BET value of 5-120 m²/g and a linseed oil absorption of 30-80 mL/100 g; and sulfur, wherein, per 100 parts by mass of the diene rubber, there are 0.2-15 parts by mass of the zinc dithiophosphate, 1-70 parts by mass of the inorganic filler, and less than 2.5 parts by mass of zinc oxide.

### CITATION LIST

### PATENT LITERATURE

Patent Literature 1: JP 4559573 B

### SUMMARY OF INVENTION

### TECHNICAL PROBLEM

The present invention aims to solve the problem and provide a rubber composition that can achieve a balanced improvement in wet grip performance, abrasion resistance, and abrasion appearance after abrasion, and a pneumatic tire including a tread formed from the rubber composition.

### SOLUTION TO PROBLEM

The present invention relates to a rubber composition, containing:
a rubber component including a diene rubber;
an inorganic filler having a BET value of 10 to 120 m²/g, the inorganic filler being formed of a compound represented by formula below, magnesium sulfate, or silicon carbide; and
a low temperature plasticizer (hereinafter also referred to as a low temperature plasticizer) having a freezing point of -10°C or lower, wherein the plasticizer includes no process oil,
the rubber composition containing, per 100 parts by mass of the rubber component, 1 to 70 parts by mass of the inorganic filler, and 1 to 30 parts by mass of the low temperature plasticizer,

   mM ·xSiO_{y} ·zH₂O

   wherein M represents at least one metal selected from the group consisting of Al, Mg, Ti, Ca, and Zr, or an oxide or hydroxide of the metal; m represents an integer of 1 to 5; x represents an integer of 0 to 10; y represents an integer of 2 to 5; and z represents an integer of 0 to 10.

In the rubber composition of the present invention, the inorganic filler is preferably aluminum hydroxide.

The rubber composition of the present invention preferably further comprises a fine particle carbon black having a BET value of 151 m²/g or more, preferably a BET value of 180 m²/g or more.

In the rubber composition of the present invention, the low temperature plasticizer preferably has a weight average molecular weight of 400 or more and a flash point of 200°C or higher.

In the rubber composition of the present invention, the low temperature plasticizer is preferably an aliphatic polybasic acid ester.

In the rubber composition of the present invention, the rubber component preferably includes 70% by mass or more of a styrene-butadiene rubber having a styrene content of 15% to 60%.

The rubber composition of the present invention is preferably for use in tire treads.

Another aspect of the present invention relates to a pneumatic tire, including a tread formed from the rubber composition of the present invention.

### ADVANTAGEOUS EFFECTS OF INVENTION

The rubber composition of the present invention contains a specific rubber component in combination with a predetermined inorganic filler having a predetermined BET value, a low temperature plasticizer (e.g. a phosphoric acid ester, phthalic acid ester, or aliphatic polybasic acid ester) having a specific freezing point, and optionally a fine particle carbon black having a specific BET value. A pneumatic tire including a tread formed from such a rubber composition can achieve a balanced improvement in wet grip performance, abrasion resistance, and abrasion appearance after abrasion (i.e. grainy peaks like waves).

### BRIEF DESCRIPTION OF DRAWINGS

Fig. 1 shows a reaction between aluminum and silica during the kneading or vulcanization of rubber compounds, or an instantaneous reaction between aluminum hydroxide on the tire surface and silica on the road surface.
Fig. 2 shows an image of a curve of differential scanning calorimetry of aluminum hydroxide.

### DESCRIPTION OF EMBODIMENTS

The rubber composition of the present invention contains a specific rubber component in combination with predetermined amounts of a predetermined inorganic filler having a predetermined BET value, a low temperature plasticizer having a specific freezing point, and optionally a fine particle carbon black having a specific BET value.

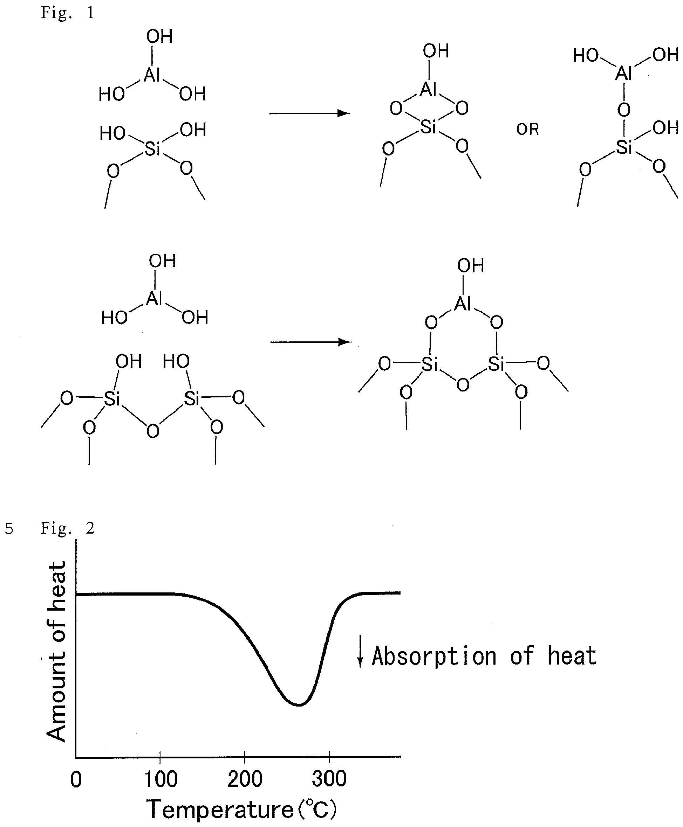

The addition of an inorganic filler such as aluminum hydroxide having a specific BET value improves wet grip performance. This effect is presumably produced by the following effects (1) to (3).
(1) During kneading, the added inorganic filler such as aluminum hydroxide (Al(OH)₃) is partially converted to alumina (Al₂O₃) having a Mohs hardness equal to or higher than that of silica, or the inorganic filler such as aluminum hydroxide binds to silica (through covalent bonding or dehydration) and is immobilized by the finely-dispersed silica chains in the rubber compound. Such metal oxide aggregates or inorganic filler is considered to provide an anchoring effect to the micro-roughness (having a pitch of tens of micrometers) of the aggregates on the road surface, thereby enhancing wet grip performance.
(2) As a result of the contact (friction) between silicon dioxide on the road surface and the inorganic filler, such as aluminum hydroxide, on the tire surface during running, covalent bonds are considered to be instantaneously formed as shown in Fig. 1, thereby improving wet grip performance.
(3) A part of the surface of tires on the wet road makes contact with the road surface through a water film. Usually, such a water film is considered to be evaporated by the friction heat generated at sites where the tire makes direct contact with the road surface. When aluminum hydroxide, for example, is incorporated, however, the friction heat is considered to contribute to the progress of an endothermic reaction of aluminum hydroxide on the tire surface as shown by "Al(OH)₃ → 1/2 Al₂O₃ + 3/2 H₂O", thereby resulting in reduced evaporation of the water film (moisture) . In the case where the water film is evaporated, a void space is formed between the tire surface and the road surface and thus the contact area between the road surface and the tire is reduced, resulting in a decrease in wet grip performance.

As described above, the wet grip performance is improved by the effects of the addition of a conventional inorganic filler such as aluminum hydroxide, but on the other hand, the abrasion resistance or abrasion appearance after abrasion usually deteriorates. Accordingly, it is difficult to achieve a balanced improvement in these properties. In the present invention, since an inorganic filler such as aluminum hydroxide having a predetermined BET value is incorporated, the wet grip performance is improved while reducing the deterioration of abrasion resistance and abrasion appearance after abrasion and maintaining the properties well. Thus, a balanced improvement in these properties is achieved. Further, in the present invention, since a low temperature plasticizer having a specific freezing point and optionally a fine particle carbon black having a specific BET value is incorporated, in addition to such a specific inorganic filler, the abrasion resistance and abrasion appearance after abrasion are significantly improved. Therefore, in the present invention, the balance of wet grip performance, abrasion resistance, and abrasion appearance after abrasion, and even cut and chip resistance is synergistically improved.

In the rubber composition of the present invention, the abrasion resistance is improved by the optional combined use of a predetermined inorganic filler having a predetermined BET value and a fine particle carbon black having a specific BET value. The mechanism of this is considered as follows.

Specifically, in rubber compositions containing fine particle carbon black, the fine particle carbon black can be entangled with the rubber component to form insolubles (gel phase) which do not dissolve when the unvulcanized rubber is immersed into toluene. This gel phase has a great effect on abrasion resistance after vulcanization or tire hardness. In the present invention, the use of a fine particle carbon black having a specific BET value makes it possible to form a particularly sufficient amount of gel phase. When an inorganic filler such as aluminum hydroxide having a predetermined BET value is kneaded into this gel phase, the inorganic filler is incorporated in the form of single particles into the gel phase formed from the fine particle carbon black and the rubber component in the kneaded rubber mixture. Thus, the inorganic filler is immobilized in the gel phase, thereby resulting in improved grip and improved abrasion resistance. Since a particularly sufficient amount of gel phase is formed in the rubber composition of the present invention, even if the gel phase is temporarily broken by impact from the road surface, the entanglement among the fine particle carbon black particles will be re-formed. It is probably for this reason that higher abrasion resistance can be exhibited.

Further, the inorganic filler such as aluminum hydroxide used in the present invention, which has a sufficiently smaller BET value than that of silica and thus low aggregation properties, will be uniformly distributed in the form of single particles in the vulcanized rubber composition. This allows the tires to scratch the micro-roughness (tens of micrometers (= typically 0.08 mm) in height) of the road surface for grip. Even scratching the micro-roughness can cause large hysteresis loss, i.e. high grip, if the total number of scratches over the entire contact area with the road surface is large. Thus, an effect of improving grip performance can also be produced by the combined use of the predetermined inorganic filler having a predetermined BET value and the fine particle carbon black having a specific BET value.

Road surfaces are classified into micro-roughness surface (typically 0.08 mm in height) and macro-roughness surface (typically 8 mm in height). In the case of the micro-roughness, tire rolling is dominantly accompanied by high-frequency vibration. According to the WLF equation, the viscoelastic behavior corresponds to that during vibration at a low temperature of about 20°C because there is a 100-fold difference between the micro-roughness and the macro-roughness.

In the rubber composition of the present invention, the grip performance and abrasion resistance are improved by the combined use of a predetermined inorganic filler having a predetermined BET value and a low temperature plasticizer having a specific freezing point.

The low temperature plasticizer serves to enhance the low temperature plasticity of the rubber composition and reduce the brittle temperature due to its SP value close to both the SP values of polymers and tackifying resins and also due to its chemical composition. Further, the combined use of the low temperature plasticizer reduces the small strain E* and improves the conformity to the micro-roughness (tens of micrometers (= typically 0.08 mm) in height) of the road surface. This allows the tires to further effectively scratch the micro-roughness (tens of micrometers (= typically 0.08 mm) in height) of the road surface for grip. Further, the low temperature plasticizer also improves abrasion resistance or abrasion appearance after abrasion because it improves the polymer sliding during tensile deformation. The low temperature plasticizer particularly improves grip performance on low µ road surfaces or at low temperatures.

In the rubber composition of the present invention, the predetermined inorganic filler having a predetermined BET value is at least used with the low temperature plasticizer having a specific freezing point and may be used with both the fine particle carbon black having a specific BET value and the low temperature plasticizer having a specific freezing point. When both the fine particle carbon black having a specific BET value and the low temperature plasticizer having a specific freezing point are used, particularly high effects can be achieved.

The rubber composition of the present invention contains a diene rubber in the rubber component.

Non-limiting examples of the diene rubber include polybutadiene rubber (BR), styrene-butadiene rubber (SBR), styrene-isoprene-butadiene rubber (SIBR), chloroprene rubber (CR), and acrylonitrile-butadiene rubber (NBR). Among these, BR or SBR is preferred because they provide good durability while ensuring good handling stability, good fuel economy, and good elongation at break, with SBR being more preferred.

Non-limiting examples of BR include those commonly used in the tire industry, such as high-cis BR, 1,2-syndiotactic polybutadiene crystal (SPB)-containing BR, and BR synthesized using rare earth catalysts (rare earth-catalyzed BR). Preferred among these is rare earth-catalyzed BR because it provides good durability while ensuring good handling stability, good fuel economy, and good elongation at break.

The rare earth-catalyzed BR may be conventional one, and examples include those synthesized using rare earth catalysts (catalysts containing lanthanide rare earth compounds, organic aluminum compounds, aluminoxanes, or halogen-containing compounds, optionally with Lewis bases). Preferred among these is Nd-catalyzed BR which is synthesized using neodymium catalysts.

In cases where the rubber composition of the present invention contains BR, the amount of BR based on 100% by mass of the rubber component is preferably 10% by mass or more, while it is preferably 60% by mass or less, more preferably 40% by mass or less. When the amount falls within the above-described range, higher levels of abrasion resistance and higher levels of grip performance can be simultaneously achieved for tires for general passenger vehicles.

Non-limiting examples of SBR include emulsion-polymerized SBR (E-SBR), solution-polymerized SBR (S-SBR), and modified SBR for silica which has been modified with compounds interactive with silica.

The SBR preferably has a bound styrene content of 15% by mass or more, more preferably 18% by mass or more, still more preferably 20% by mass or more. The bound styrene content is also preferably 60% by mass or less, more preferably 55% by mass or less, still more preferably 50% by mass or less. When the bound styrene content is less than 15% by mass, the wet grip performance may be insufficient. When the bound styrene content is more than 60% by mass, the polymer cannot be easily dispersed, and the fuel economy may deteriorate.

As used herein, the bound styrene content is determined by ¹H-NMR.

In cases where the rubber composition of the present invention contains SBR, the amount of SBR based on 100% by mass of the rubber component is preferably 50% by mass or more, more preferably 70% by mass or more, still more preferably 80% by mass or more, while the upper limit of the amount of SBR is not particularly limited and may be 100% by mass and, in cases where SBR is used in combination with any other rubber, the amount is preferably 90% by mass or less. When the amount falls within the above-described range, the effects of the present invention can be achieved well.

The rubber component preferably includes 70% by mass or more of a styrene-butadiene rubber having a bound styrene content of 15% to 60% by mass, more preferably of a styrene-butadiene rubber having a bound styrene content of 18% to 55% by mass, among others.

The rubber composition of the present invention may contain rubbers other than the diene rubber in the rubber component.

Examples of other rubbers include isoprene-based rubbers such as natural rubber (NR) and polyisoprene rubber (IR).

The rubber composition of the present invention contains an inorganic filler having a BET value of 10 to 120 m²/g, the inorganic filler being formed of a compound represented by the formula below, magnesium sulfate, or silicon carbide.

mM ·xSiO_{y} ·zH₂O

In the formula, M represents at least one metal selected from the group consisting of Al, Mg, Ti, Ca, and Zr, or an oxide or hydroxide of the metal; m represents an integer of 1 to 5; x represents an integer of 0 to 10; y represents an integer of 2 to 5; and z represents an integer of 0 to 10.

Examples of the inorganic filler include alumina, alumina hydrate, aluminum hydroxide, magnesium hydroxide, magnesium oxide, talc, titanium while, titanium black, calcium oxide, calcium hydroxide, magnesium aluminum oxide, clay, pyrophyllite, bentonite, aluminum silicate, magnesium silicate, calcium silicate, calcium aluminum silicate, magnesium silicate, zirconium, zirconium oxide, magnesium sulfate, and silicon carbide (SiC) . These inorganic compounds may be used alone, or two or more of these may be used in combination. Preferred among these are inorganic fillers in which M is Al or Zr because they have a Mohs hardness of 3 or more, water resistance, and oil resistance and, when processed into particles of micron size, they produce a scratching effect, thereby improving wet grip performance while providing good abrasion resistance. More preferred is aluminum hydroxide or zirconium oxide because they are abundant resources and low cost. Particularly preferred is aluminum hydroxide as it further provides good kneading productivity and good roll processability.

The inorganic filler has a BET value of 10 to 120 m²/g. If the BET value is out of this range, the abrasion resistance and wet grip performance may deteriorate. The lower limit of the BET value is preferably 12 m²/g, while the upper limit of the BET value is preferably 110 m²/g, more preferably 100 m²/g.

As used herein, the BET value (nitrogen adsorption specific surface area) means a value measured in accordance with ASTM D3037-81.

The inorganic filler preferably has an average particle size of 1.5 µm or less, more preferably 0.69 µm or less, still more preferably 0.6 um or less. The average particle size is also preferably 0.2 µm or more, more preferably 0.25 µm or more, still more preferably 0.4 µm or more. When the average particle size is more than 1.5 um, the abrasion resistance and wet grip performance may be reduced. When the average particle size is less than 0.2 um, the abrasion resistance or processability may be reduced. The average particle size of the inorganic filler refers to a number average particle size which is measured with a transmission electron microscope.

In order to ensure abrasion resistance and wet grip performance of tires and to reduce the metal wear of Banbury mixers or extruders, the inorganic filler preferably has a Mohs hardness of 7 like silica, or less than 7, more preferably a Mohs hardness of 2 to 5. Mohs hardness, which is one of mechanical properties of materials, is a measure commonly used through the ages in mineral-related fields. Mohs hardness is measured by scratching a material (e.g. aluminum hydroxide) to be analyzed for hardness with a reference material, and determining the presence or absence of scratches.

In particular, it is preferred to use an inorganic filler which has a Mohs hardness of less than 7 and whose dehydration reaction product has a Mohs hardness of 8 or more. For example, aluminum hydroxide, which has a Mohs hardness of about 3, prevents abrasion (wear) of Banbury mixers or rolls. Further, the upper surface layer of aluminum hydroxide particles undergoes a dehydration reaction (transition) due to vibration or heat build-up during running and partially due to kneading, and thus the aluminum hydroxide is converted to alumina having a Mohs hardness of about 9, which is equal to or higher than the hardness of the stones on the road surface. Accordingly, excellent abrasion resistance and excellent wet grip performance can be obtained. It should be noted that the interior of the aluminum hydroxide particles needs not to be entirely converted, and their partial conversion can produce the effect of scratching the road surface. Moreover, aluminum hydroxide and alumina are stable to water, bases, and acids, and neither inhibit vulcanization nor promote oxidative degradation. The inorganic filler after the transition more preferably has a Mohs hardness of 7 or more, without any upper limit. Diamond has the highest hardness of 10.

The inorganic filler preferably has a thermal decomposition onset temperature (DSC endothermic onset temperature) of 160°C to 500°C, more preferably 170°C to 400°C. When the temperature is less than 160°C, thermal decomposition or reaggregation may excessively proceed during kneading, and the metal of the kneader rotor blades, the container wall, or the like may be excessively worn. The thermal decomposition onset temperature of the inorganic filler is determined by differential scanning calorimetry (DSC). The thermal decomposition includes dehydration reactions.

The inorganic filler may be a commercial product that has the above-described BET value, and may also be, for example, an inorganic filler having been processed, for example, ground, into particles having the above-described properties. The grinding may be carried out by conventional methods such as wet grinding or dry grinding using, for example, a jet mill, a current jet mill, a counter jet mill, or a contraplex mill.

If necessary, particles having the predetermined BET value may be prepared by fractionation by a membrane filtering method often employed in medical fields or bio-fields, before use as a compounding agent for rubber.

The amount of the inorganic filler per 100 parts by mass of the rubber component is 1 part by mass or more, preferably 3 parts by mass or more, more preferably 5 parts by mass or more. If the amount is less than 1 part by mass, sufficient wet grip performance may not be obtained. Also, the amount of the inorganic filler is 70 parts by mass or less, preferably 65 parts by mass or less, more preferably 60 parts by mass or less. If the amount is more than 70 parts by mass, the abrasion resistance or abrasion appearance after abrasion may deteriorate to an extent that cannot be compensated by controlling other compounding agents, and the tensile strength and the like may also deteriorate.

The rubber composition of the present invention contains a low temperature plasticizer having a freezing point of -10°C or lower, and optionally further contains a fine particle carbon black having a specific BET range. The combined use of these components with the inorganic filler allows the resulting rubber composition to achieve a balanced improvement in wet grip performance, abrasion resistance, and abrasion appearance after abrasion.

The fine particle carbon black has a BET value of 151 m²/g or more. The incorporation of the carbon black having a BET value of 151 m²/g or more provides sufficient abrasion resistance and sufficient wet grip performance.

The fine particle carbon black more preferably has a BET value of 160 m²/g or more, still more preferably 180 m²/g or more. The BET value is also preferably 300 m²/g or less, more preferably 250 m²/g or less, still more preferably 200 m²/g or less. When the BET value is more than 300 m²/g, the processability and fuel efficiency may be reduced.

In cases where the rubber composition contains the fine particle carbon black, the amount of the fine particle carbon black per 100 parts by mass of the rubber component is preferably 5 parts by mass or more, more preferably 20 parts by mass or more. When the amount is less than 5 parts by mass, the effects of improving abrasion resistance and grip performance may not be sufficiently obtained. The amount is also preferably 140 parts by mass or less, more preferably 130 parts by mass or less. When the amount is more than 140 parts by mass, the tensile properties may be reduced.

The combined amount of the inorganic filler and the fine particle carbon black, per 100 parts by mass of the rubber component, is preferably 50 parts by mass or more, more preferably 60 parts by mass or more. When the combined amount is less than 50 parts by mass, sufficient abrasion resistance and sufficient wet grip performance may not be obtained. The combined amount is also preferably 190 parts by mass or less, more preferably 180 parts by mass or less. When the combined amount is more than 190 parts by mass, the tensile properties or abrasion resistance may be reduced. The combined amount refers to the sum of the amount of the inorganic filler and the amount of the fine particle carbon black in the rubber composition containing the fine particle carbon black.

In cases where the rubber composition contains the fine particle carbon black, the blending ratio (mass ratio) of the inorganic filler to the fine particle carbon black preferably ranges from 1:3 to 1:5. The use of the fine particle carbon black in a sufficient amount relative to the inorganic filler allows a gel phase that can sufficiently incorporate the inorganic filler to be formed.

The low temperature plasticizer has a freezing point of -10°C or lower. Due to its SP value close to both the SP values of polymers and tackifying resins and also due to its chemical composition, the low temperature plasticizer having such a low freezing point has an effect in reducing the compound Tg or brittle temperature of the rubber composition, in terms of rubber physical properties. Also since such a low temperature plasticizer easily dissolves grip resins having a high softening point or a high SP value, it has an effect in highly dispersing the resins in the rubber, i.e., improving the continuous blooming of tackifying resins during running and even the continuous grip.

The upper limit of the freezing point of the low temperature plasticizer is preferably -15°C or lower, while the lower limit thereof is preferably -100°C or higher, more preferably -50°C or higher, still more preferably -30°C or higher. When the freezing point falls within the above-described range, the effects of the present invention can be better achieved.

The freezing point herein is measured as follows.

A sample is hermetically sealed in an aluminum cell, and the aluminum cell is inserted into a sample holder of a differential scanning calorimeter (DSC-60A available from Shimadzu Corporation). Then, an endothermic peak is observed while heating the sample holder up to 150°C at a rate of 10°C/min in a nitrogen atmosphere. The endothermic peak is taken as the freezing point.

The low temperature plasticizer preferably has an SP value of 8 to 9 in order to ensure compatibility with the diene rubber. The SP value means a solubility parameter determined using Hansen's equation. Moreover, in order to enhance the compatibility particularly in terms of the structural similarity to SBR or NR, the low temperature plasticizer preferably contains an ethylhexyl group or a phenyl group.

The low temperature plasticizer includes no process oil.

Since the low temperature plasticizer possibly ignites during kneading with a Banbury mixer, the low temperature plasticizer preferably has a flash point of 200°C or higher. For example, when the discharge temperature during kneading is set at 180°C, the maximum temperature of the rubber composition locally reaches as high as 195°C. In the case of the low temperature plasticizer having a flash point of 200°C or higher, the risk of ignition is reduced.

The flash point of the low temperature plasticizer herein is determined by the Cleveland open cup method in accordance with JIS K 2265-4:2007.

The low temperature plasticizer has been conventionally widely used in vinyl chloride, cellulose, resin plastic, various types of rubber, and other applications. In the rubber composition of the present invention, the low temperature plasticizer preferably has a weight average molecular weight (Mw) of 400 or more in order to prevent its migration to adjacent components and increase the flash point.

As used herein, the weight average molecular weight can be determined by gel permeation chromatography (GPC) (GPC-8000 series available from Tosoh Corporation, detector: differential refractometer, column: TSKGEL SUPERMALTPORE HZ-M available from Tosoh Corporation) relative to polystyrene standards.

The low temperature plasticizer may suitably include at least one compound selected from the group consisting of phosphoric acid esters, phthalic acid esters, aliphatic polybasic acid esters, trimellitic acid esters, acetic acid esters, and ricinoleic acid esters. Among these compounds, phosphoric acid esters, phthalic acid esters, and aliphatic polybasic acid esters are preferred as they allow the effects of the present invention to be better achieved. Further, in order to reduce the amount of phosphorus to be used, aliphatic polybasic acid esters are suitable.

The compound preferably has an SP value of 8.3 or more, more preferably 8.6 or more. The SP value is also preferably 9.5 or less, more preferably 9.0 or less, still more preferably 8.8 or less. When the SP value falls within the above-described range, the compatibility with the diene rubber such as NR or SBR is ensured.

The compound preferably has a freezing point of -50°C or higher, more preferably -40°C or higher, still more preferably -30°C or higher. The freezing point is also preferably -10°C or lower, more preferably -15°C or lower. When the freezing point falls within the above-described range, the effects of the present invention can be achieved well.

Examples of phosphoric acid esters that can be used include known phosphoric acid ester plasticizers such as mono-, di-, or triesters of phosphoric acid and C1-C12 monoalcohols or their (poly) oxyalkylene adducts. Specific examples include tris(2-ethylhexyl)phosphate, trimethyl phosphate, triethyl phosphate, tributyl phosphate, triphenyl phosphate, tricresyl phosphate, trixylenyl phosphate, cresyl diphenyl phosphate, and 2-ethylhexyl diphenyl phosphate.

Examples of phthalic acid esters that can be used include known phthalic acid ester plasticizers such as diesters of phthalic acid and alcohols having approximately 1 to 13 carbon atoms. Specific examples include bis (2-ethylhexyl) phthalate, dimethyl phthalate, diethyl phthalate, dibutyl phthalate, diisodecyl phthalate, butyl benzyl phthalate, diisononyl phthalate, and ethyl phthalyl ethyl glycolate.

Examples of aliphatic polybasic acid esters include aliphatic dibasic acid esters and aliphatic tribasic acid esters. Preferred among these are aliphatic dibasic acid esters such as adipic acid esters, azelaic acid esters, sebacic acid ester, maleic acid esters, and fumaric acid esters as they allows the effects of the present invention to be better achieved.

Among these aliphatic dibasic acid esters, compounds represented by the following formula (1) can be particularly suitably used.

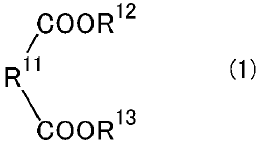

In the formula (1), R¹¹ represents a saturated or unsaturated divalent hydrocarbon group, and R¹² and R¹³ are the same as or different from each other and each represent a branched or unbranched alkyl group or a group represented by -(R¹⁴-O)ₙ-R¹⁵ where each of the R¹⁴ groups, whose number is n, is the same as or different from each other and represents a branched or unbranched alkylene group, R¹⁵ represents a branched or unbranched alkyl group, and n represents an integer.

The saturated or unsaturated divalent hydrocarbon group for R¹¹ may be branched or unbranched, and examples include alkylene groups, alkenylene groups, and arylene groups. The saturated or unsaturated hydrocarbon group preferably has 1 to 10 carbon atoms, more preferably 2 to 6 carbon atoms. Specific examples of alkylene groups include methylene, ethylene, propylene, butylene, pentylene, hexylene, heptylene, octylene, nonylene, and decylene groups. Specific examples of alkenylene groups include vinylene, 1-propenylene, and 2-propenylene groups. Specific examples of arylene groups include phenylene, tolylene, and xylylene groups.

The branched or unbranched alkyl group for R¹² or R¹³ preferably has 1 to 15 carbon atoms, more preferably 4 to 10 carbon atoms. Specific examples include methyl, ethyl, n-propyl, isopropyl, n-butyl, iso-butyl, sec-butyl, tert-butyl, pentyl, hexyl, heptyl, octyl, nonyl, and decyl groups.

In the group represented by -(R¹⁴-O)ₙ-R¹⁵ for R¹² or R¹³, the branched or unbranched alkylene group for R¹⁴ preferably has 1 to 3 carbon atoms. The branched or unbranched alkyl group for R¹⁵ preferably has 1 to 10 carbon atoms, more preferably 2 to 6 carbon atoms. Specific examples of the alkylene group and the alkyl group may be as described above. The symbol n is preferably an integer of 1 to 10, more preferably 1 to 5, still more preferably 1 to 3.

Preferably at least one of R¹² or R¹³, more preferably both R¹² and R¹³, is a group represented by -(R¹⁴-O)ₙ-R¹⁵ as in this case, the effects of the present invention can be better achieved.

Suitable examples of the aliphatic dibasic acid esters represented by the formula (1) include bis(alkoxyalkoxyalkyl) adipates containing the group represented by - (R¹⁴-O)ₙ-R¹⁵, such as bis[2-(2-butoxyethoxy)ethyl] adipate. Other examples include di-n-butyl adipate, and diisobutyl adipate. These may be used alone, or two or more of these may be used in combination.

Examples of trimellitic acid esters that can be used include known trimellitic acid ester plasticizers such as triesters of trimellitic acid and C8-C13 saturated aliphatic alcohols. Specific examples include tri-2-ethylhexyl trimellitate, tri-n-octyl trimellitate, tridecyl trimellitate, triisodecyl trimellitate, and di-n-octyl-n-decyl trimellitate.

Examples of acetic acid esters that can be used include known acetic acid ester plasticizers such as esters of acetic acid and mono- or polyglycerin. Specific examples include glyceryl triacetate, 2-ethylhexyl acetate, and polyglycerin acetic acid ester having a degree of polymerization of polyglycerin of 2 to 4 and an acetylation rate of 50% to 100%.

Examples of ricinoleic acid esters include known ricinoleic acid ester plasticizers such as alkyl acetyl ricinoleates (alkyl group: C1 to C10) e.g. methyl acetyl ricinoleate and butyl acetyl ricinoleate.

The low temperature plasticizer may include other components in addition to the above-described compound. Examples of other components include known plasticizers other than the above-described compound, and polyalkylene glycol alkyl ethers such as diethylene glycol monobutyl ether.

The amount of the above-described compound based on 100% by mass of the low temperature plasticizer is preferably 80% by mass or more, more preferably 90% by mass or more, and may be 100% by mass. When such an amount of the compound is incorporated, the effects of the present invention can be better achieved.

Examples of the low temperature plasticizer include tris(2-ethylhexyl) phosphate (TOP, freezing point: -70°C or lower, flash point: 204°C, SP value: 8.1, Mw: 435), bis(2-ethylhexyl) sebacate (DOS, freezing point: -62°C, flash point: 222°C, SP value: 8.4, Mw: 427), bis(2-ethylhexyl) phthalate (DOP, freezing point: -51°C, flash point: 218°C, SP value: 8.9, Mw: 391), and bis[2-(2-butoxyethoxyethyl)ethyl] adipate (BXA, freezing point: -19°C, flash point: 207°C, SP value: 8.7, Mw: 435). Suitable among these is TOP or BXA as they are highly compatible with the rubber component, and have a flash point of 200°C or higher and a weight average molecular weight as high as 400 or more.

The amount of the low temperature plasticizer per 100 parts by mass of the rubber component is preferably 1 part by mass or more, more preferably 3 parts by mass or more. When the amount is less than 1 part by mass, the effects of the present invention may not be sufficiently achieved. The amount is preferably 30 parts by mass or less, more preferably 20 parts by mass or less, still more preferably 15 parts by mass or less. When the amount is more than 30 parts by mass, the wet grip performance, abrasion resistance, or tensile properties may be reduced.

In cases where the low temperature plasticizer includes at least one compound selected from the group consisting of phosphoric acid esters, phthalic acid esters, aliphatic polybasic acid esters, trimellitic acid esters, acetic acid esters, and ricinoleic acid esters, the amount of the compound in the rubber composition of the present invention is preferably 1 part by mass or more, more preferably 5 parts by mass or more per 100 parts by mass of the rubber component. The amount is also preferably 30 parts by mass or less, more preferably 20 parts by mass or less, still more preferably 15 parts by mass or less.

The rubber composition of the present invention preferably contains a coumarone-indene resin having a softening point of -20°C to 160°C and/or an α-methylstyrene-based resin having a softening point of -20°C to 180°C. The incorporation of the coumarone-indene resin and/or the α-methylstyrene-based resin further improves grip performance and tensile properties.

The coumarone indene resin refers to a resin containing coumarone and indene as the monomers forming the skeleton (backbone) of the resin. Examples of monomers other than coumarone and indene that can be contained in the skeleton include styrene, α-methylstyrene, methylindene, and vinyltoluene.

The coumarone-indene resin has a softening point of -20°C to 160°C. The upper limit of the softening point is preferably 145°C or lower, more preferably 130°C or lower. The lower limit of the softening point is preferably -10°C or higher, more preferably -5°C or higher. Coumarone-indene resins having a softening point of higher than 160°C tend to have poor dispersibility during kneading and to deteriorate fuel economy. Coumarone-indene resins having a softening point of lower than -20°C are difficult to prepare, and may also be changed in properties during use because they are highly likely to migrate to other components and are highly volatile.

The use of a coumarone-indene resin having a softening point of 90°C to 140°C, among the coumarone-indene resins, improves dry grip performance. In particular, the use of a coumarone-indene resin having a softening point of 100°C to 120°C provides an overall increase in tanδ over a temperature range of 0°C to 80°C and also provides good elongation at break. The use of a t-butylphenol resin having a softening point of 120°C to 160°C (e.g. Koresin having a softening point of 145°C) improves grip performance particularly at high temperatures (about 80-120°C). The combined use of the Koresin with an α-methylstyrene-based resin having a softening point of about 85°C, which provides excellent grip performance at low temperatures (20-40°C), improves grip performance at tire running temperatures ranging from 20°C to 120°C.

The use of a coumarone-indene resin having a softening point of 10°C to 30°C does not improve grip performance, but provides an overall decrease in tanδ. Such a coumarone-indene resin having a softening point of 10°C to 30°C can be used mainly to improve elongation at break.

The reason why the use of the coumarone-indene resin improves elongation at break is probably that the coumarone-indene resin imparts moderate sliding properties to the crosslinked polymer chains, thereby resulting in uniform elongation.

As used herein, the softening point is determined as set forth in JIS K 6220-1:2001 with a ring and ball softening point measuring apparatus and is defined as the temperature at which the ball drops down.

Examples of the α-methylstyrene-based resin include α-methylstyrene homopolymer and copolymers of α-methylstyrene and styrene.

The α-methylstyrene-based resin has a softening point of -20°C to 160°C. The upper limit of the softening point is preferably 145°C or lower, more preferably 130°C or lower. The lower limit of the softening point is preferably -10°C or higher, more preferably -5°C or higher. α-Methylstyrene-based resins having a softening point of higher than 160°C tend to have poor dispersibility during kneading and to deteriorate fuel economy. α-Methylstyrene-based resins having a softening point of lower than -20°C are difficult to prepare, and may also be changed in properties during use because they are highly likely to migrate to other components and are highly volatile.

The combined amount of the coumarone-indene resin and/or the α-methylstyrene-based resin, per 100 parts by mass of the rubber component, is preferably 1 part by mass or more, more preferably 2 parts by mass or more, still more preferably 3 parts by mass or more, while it is preferably 40 parts by mass or less, more preferably 35 parts by mass or less, still more preferably 30 parts by mass or less. When the combined amount is less than 1 part by mass, the grip or tensile properties may be insufficiently improved. When the combined amount is more than 40 parts by mass, the grip or tensile properties may not be improved and the fuel economy may deteriorate. The combined amount refers to, in the case of the rubber composition containing the coumarone-indene resin and the α-methylstyrene-based resin, the sum of the amounts of both components, and in the case of the rubber composition containing either the coumarone-indene resin or the α-methylstyrene-based resin, the amount of the corresponding resin.

The rubber composition of the present invention may contain resins other than the coumarone-indene resin and the α-methylstyrene-based resin, such as a terpene-based resin or an alkylphenol-based resin. The incorporation of the terpene-based resin further improves grip performance or tensile properties, while the incorporation of the alkylphenol-based resin further improves grip performance, and particularly dry grip performance.

Examples of the terpene-based resin include polyterpene resins, terpene phenol resins, aromatic modified terpene resins, and resins obtained by hydrogenating these resins.

The polyterpene resin refers to a resin obtained by polymerizing a terpene compound. The terpene compound refers to a hydrocarbon having a composition represented by (C₅H₈)ₙ or an oxygen-containing derivative thereof, having a terpene backbone and is classified as a monoterpene (C₁₀H₁₆), a sesquiterpene (C₁₅H₂₄), a diterpene (C₂₀H₃₂) or other terpenes. Examples of the terpene compound include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resin include terpene resins made from the above-mentioned terpene compounds, such as α-pinene resin, β-pinene resin, limonene resin, dipentene resin, and β-pinene-limonene resin. Examples of the terpene phenol resin include resins obtained by copolymerization of the above-mentioned terpene compounds and phenolic compounds. Specific examples include resins obtained by condensation of the above-mentioned terpene compounds, phenolic compounds, and formaldehyde. The phenolic compounds include, for example, phenol, bisphenol A, cresol, and xylenol. Examples of the aromatic modified terpene resin include resins obtained by modifying terpene resins with aromatic compounds. The aromatic compounds include any compound having an aromatic ring, such as phenolic compounds e.g. phenol, alkylphenols, alkoxyphenols, or unsaturated hydrocarbon group-containing phenols; naphthol compounds e.g. naphthol, alkylnaphthols, alkoxynaphthols, or unsaturated hydrocarbon group-containing naphthols; styrene and styrene derivatives e.g. alkylstyrenes, alkoxystyrenes, or unsaturated hydrocarbon group-containing styrenes; and coumarone and indene.

The terpene-based resin preferably has a softening point of 100°C to 160°C. More preferably, the upper limit of the softeningpoint is 140°C or lower, while the lower limit is 110°C or higher.

In cases where the rubber composition of the present invention contains the terpene-based resin, the amount of the terpene-based resin per 100 parts by mass of the rubber component is preferably 1 part by mass or more, more preferably 3 parts by mass or more, still more preferably 10 parts by mass or more, while it is preferably 50 parts by mass or less, more preferably 40 parts by mass or less. When the amount falls within the above-described range, the effects of the present invention can be better achieved.

Non-limiting examples of the alkylphenol-based resin include alkylphenol-aldehyde condensation resins obtained by reacting alkylphenols with aldehydes such as formaldehyde, acetaldehyde, or furfural in the presence of acid or alkali catalysts; alkylphenol-alkyne condensation resins obtained by reacting alkylphenols with alkynes such as acetylene; and modified alkylphenol resins obtained by modifying the foregoing resins with compounds such as cashew oil, tall oil, linseed oil, various animal or vegetable oils, unsaturated fatty acids, rosin, alkylbenzene resins, aniline, or melamine. In view of the effects of the present invention, alkylphenol-alkyne condensation resins are preferred among these, with alkylphenol-acetylene condensation resins being particularly preferred.

Examples of the alkylphenol of the alkylphenol-based resin include cresol, xylenol, t-butylphenol, octylphenol, and nonylphenol. Preferred among these are phenols containing branched alkyl groups, such as t-butylphenol, with t-butylphenol being particularly preferred.

The alkylphenol-based resin preferably has a softening point of 100°C to 160°C. More preferably, the upper limit of the softening point is 150°C or lower, while the lower limit is 130°C or higher.

In cases where the rubber composition of the present invention contains the alkylphenol-based resin, the amount of the alkylphenol-based resin per 100 parts by mass of the rubber component is preferably 1 part by mass or more, more preferably 3 parts by mass or more, while it is preferably 50 parts by mass or less, more preferably 40 parts by mass or less, still more preferably 30 parts by mass or less. When the amount falls within the above-described range, the effects of the present invention can be better achieved.

The rubber composition of the present invention usually contains a cross-linking agent such as sulfur or a hybrid cross-linking agent. Examples of the sulfur include those commonly used in the rubber industry, such as powdered sulfur, precipitated sulfur, colloidal sulfur, insoluble sulfur, highly dispersible sulfur, and soluble sulfur. Examples of the hybrid cross-linking agent include the commercial product KA9188.

In the rubber composition of the present invention, the total amount of sulfur derived from cross-linking agents, per 100 parts by mass of the rubber solids, is preferably 0.4 parts by mass or more, more preferably 0.5 parts by mass or more, still more preferably 0.8 parts by mass or more, while the total amount of sulfur is preferably 2.0 parts by mass or less, more preferably 1.6 parts by mass or less, still more preferably 1.4 parts by mass or less. When the total amount is less than 0.4 parts by mass, the vulcanizate hardness (Hs) or co-curing with neighboring rubber compounds may be insufficient. When the total amount is more than 2.0 parts by mass, the abrasion resistance may deteriorate. The total amount of sulfur derived from crosslinking agents refers to the net sulfur content in the entire crosslinking agents introduced in the final kneading. For example, when insoluble sulfur (containing oil) is used as a crosslinking agent, it means the net sulfur content, excluding the oil content.

The rubber composition of the present invention may appropriately contain, in addition to the above-described components, compounding agents commonly used in the tire industry, such as wax, zinc oxide, an antioxidant, a mold release agent or other materials.

The rubber composition of the present invention may contain process oil. In this case, the amount of the process oil contained per 100 parts by mass of the rubber component is preferably 20 parts by mass or less, more preferably 15 parts by mass or less . The rubber composition may not contain process oil. When the amount of the process oil is 20 parts by mass or less, the grip, abrasion resistance, and tensile properties can be improved while ensuring a predetermined hardness, and a dispersion torque can be easily imparted to filler or inorganic filler during kneading.

The rubber composition of the present invention can be prepared by known methods that involve kneading steps such as a base kneading step, and a final kneading step. The kneading steps can be carried out, for example, by kneading the above components using a kneading machine. Conventional kneading machines can be used, such as a Banbury mixer, a kneader, or an open roll mill.

In the step of kneading at least the rubber component and the inorganic filler (e.g., which corresponds to the base kneading step if the base kneading step is carried out in a single step, or the step of introducing the inorganic filler and kneading it with the rubber component if the base kneading step is divided into a series of steps as described later), for example, in the base kneading step, the discharge temperature is 150°C or higher, preferably 155°C or higher, more preferably 160°C or higher, still more preferably 165°C or higher, particularly preferably 170°C or higher. For example, the thermal decomposition (dehydration reaction) of aluminum hydroxide occurs in a temperature range as shown in Fig. 2, or in other words aluminum hydroxide has an endothermic peak with a thermal decomposition onset temperature (DSC endothermic onset temperature) of 220°C to 350°C. However, from the results of wet grip performance or abrasion resistance obtained in a rubber kneading test, the dehydration reaction with silica as shown in Fig. 1 is considered to occur from around 140°C. Hence, when the above discharge temperature is employed, aluminum hydroxide is moderately converted to alumina so that a good balance of the effects (1) to (3) can be achieved, and thus the wet grip performance can be significantly improved. If the discharge temperature is lower than 150°C, aluminum hydroxide in the rubber composition is less likely to be converted to alumina, so that the wet grip performance may be reduced. Conversely, the upper limit of the discharge temperature is not particularly limited, and may be appropriately adjusted so that desired properties can be obtained without causing compound scorch. The discharge temperature is preferably 190°C or lower, more preferably 185°C or lower.

In the case of a high filler compound system with low softener content, the base kneading step may include a series of steps. For example, the base kneading step may be a single step in which the rubber component, the inorganic filler, and the like are kneaded, or alternatively may be divided into a series of steps, e.g., X-kneading in which the rubber component, carbon black, 2/3 silica, and 2/3 silane coupling agent are kneaded, Y-kneading in which the kneaded mixture obtained by X-kneading, the remaining silica, the remaining silane coupling agent, and the other components, excluding sulfur and vulcanization accelerators, are kneaded, and Z-kneading in which the kneaded mixture obtained by Y-kneading is re-kneaded. In this case, the inorganic filler should be introduced in the X-kneading which allows for a higher kneading torque.

The base kneading step may be followed by, for example, a final kneading step in which the resulting kneaded mixture 1 is kneaded with components such as a vulcanizing agent, e.g. sulfur, and a vulcanization accelerator using a kneading machine as described above (for example, the discharge temperature is 80°C to 110°C), which is then followed by a vulcanization step in which the resulting kneaded mixture 2 (unvulcanized rubber composition) is pressed and heated at 130°C to 190°C for 5 to 30 minutes, whereby the rubber composition of the present invention can be prepared.

The rubber composition of the present invention can be used to form rubber products that show a balanced improvement in wet grip performance, abrasion resistance, and abrasion appearance after abrasion. The rubber composition is preferably used in treads for pneumatic tires, among others. The rubber composition of the present invention is also suitable for rubbers for footwear soles.

The pneumatic tire of the present invention can be produced from the rubber composition by usual methods. Specifically, the pneumatic tire may be produced as follows: an unvulcanized rubber composition containing additives as appropriate is extruded and processed into the shape of a tire tread, and formed on a tire building machine and assembled with other tire components to build an unvulcanized tire, and then the unvulcanized tire is heated and pressurized in a vulcanizer.

The pneumatic tire of the present invention is suitable as a racing tire, a tire for passenger vehicle, a tire for large passenger vehicles or large SUVs, or a tire for motor cycles. The pneumatic tire can be used as a summer tire, winter tire, or studless winter tire for these vehicles.

### EXAMPLES

The present invention is more specifically described with reference to non-limiting examples.

The chemicals used in the examples and comparative examples are listed below.

### <Rubber component (NR)>

### TSR20

### <Rubber component (SBR)>

Modified SBR: prepared by the method described later (extender oil: 37.5 parts, styrene content: 41%, vinyl content: 40%, Tg: -29°C, weight average molecular weight: 1,190,000)
N9548: available from Zeon Corporation (extender oil: 37.5 parts, styrene content: 35%, vinyl content: 18%, Tg: -40°C, weight average molecular weight: 1,090,000)
NS522: available from Zeon Corporation (extender oil: 37.5 parts, styrene content: 39%, vinyl content: 40%, Tg: -34°C, weight average molecular weight: 840,000)
NS616: available from Zeon Corporation (non-oil-extended, styrene content: 21%, vinyl content: 63%, Tg: -25°C, weight average molecular weight: 800,000)
NS612: available from Zeon Corporation (non-oil-extended, styrene content: 15%, vinyl content: 30%, Tg: -65°C, weight average molecular weight: 780,000)

### <Method for preparing modified SBR>

### (1) Preparation of chain end modifier

A 250-mL measuring flask was charged in a nitrogen atmosphere with 20.8 g of 3-(N,N-dimethylamino)-propyltrimethoxysilane (available from AZmax. Co.) and then with anhydrous hexane (available from Kanto Chemical Co., Inc.) to give a total volume of 250 mL, whereby a chain end modifier was prepared.

### (2) Preparation of modified SBR

A sufficiently nitrogen-purged, 30-L pressure-resistant vessel was charged with 18 L of n-hexane, 800 g of styrene (available from Kanto Chemical Co., Inc.), 1,200 g of butadiene, and 1.1 mmol of tetramethylethylenediamine, and the temperature was raised to 40°C. Next, after 1.8 mL of 1.6 M butyllithium (available from Kanto Chemical Co., Inc.) was added to the mixture, the temperature was raised to 50°C, followed by stirring for three hours. Subsequently, 4.1 mL of the chain end modifier was added to the resulting mixture, followed by stirring for 30 minutes. After 15 mL of methanol and 0.1 g of 2,6-tert-butyl-p-cresol (available from Ouchi Shinko Chemical Industrial Co., Ltd.) were added to the reaction solution, 1,200 g of TDAE was added and stirred for ten minutes. Thereafter, aggregates were recovered from the polymer solution by steam stripping. The aggregates were dried under reduced pressure for 24 hours to give a modified SBR. The modified SBR had a bound styrene content of 41% by mass, a Mw of 1,190,000, and a vinyl content of 40 mol%.

### <Rubber component (BR)>

CB 29 TDAE: available from LANXESS, oil-extended high-cis BR synthesized using a Nd catalyst, containing 37.5 parts by mass of TDAE per 100 parts by mass of the rubber component

### <Carbon black>

HP180: Product (BET value: 175 m²/g) available from Orion Engineered Carbons
HP160: Product (BET value: 153 m²/g) available from Orion Engineered Carbons
EB201: Pilot product (BET value: estimated 240 m²/g) available from Orion Engineering (former Evonik)
N110: SHOBLACK N110 (BET value: 142 m²/g) available from Cabot Japan K.K.
N220: SHOBLACK N220 (BET value: 111 m²/g) available from Cabot Japan K.K.
U9000: ULTRASIL U9000 (BET value: 235 m²/g) available from Evonik

### <Silica>

VN3: ULTRASIL VN3 (BET value: 175 m²/g) available from Evonik

### <Aluminum hydroxide (inorganic filler)>

Ground product (4): Dry ground product (BET value: 130 m²/g, average particle size: 0.15 um) of ATH#B available from Sumitomo Chemical Co., Ltd.
Ground product (3): Dry ground product (BET value: 102 m²/g, average particle size: 0.21 um) of ATH#B available from Sumitomo Chemical Co., Ltd.
Ground product (2) : Dry ground product (BET value: 75 m²/g, average particle size: 0.25 um) of ATH#B available from Sumitomo Chemical Co., Ltd.
Ground product (1) : Dry ground product (BET value: 34 m²/g, average particle size: 0.4 um) of ATH#B available from Sumitomo Chemical Co., Ltd.
ATH#B: Product (BET value: 15 m²/g, average particle size: 0.6 um) available from Sumitomo Chemical Co., Ltd.
ATH#C: Product (BET value: 7.0 m²/g, average particle size: 0.8 um) available from Sumitomo Chemical Co., Ltd.
C-301N: Product (BET value: 4.0 m²/g, average particle size: 1.0 um) available from Sumitomo Chemical Co., Ltd.

### <Resin>

C120: Coumarone-indene resin (softening point: 120°C, Tg: 65°C) available from Rutgers Chemicals
C100: Coumarone-indene resin (softening point: 100°C, Tg: 45°C) available from Rutgers Chemicals
C30: Coumarone-indene resin (softening point: 30°C, Tg: -10°C) available from Rutgers Chemicals
C10: Coumarone-indene resin (softening point: 10°C, Tg: -30°C) available from Rutgers Chemicals
SA85: α-Methylstyrene Sylvares SA85 (softening point: 85°C, Tg: 43°C) available from Arizona Chemical
Koresin: p-t-Butylphenol acetylene resin [p-t-butylphenol-acetylene condensation resin] (softening point: 145°C, Tg: 98°C) available from BASF
TO125: YS Polyster TO125 (aromatic modified terpene resin, softening point: 125°C) available from Yasuhara Chemical Co., Ltd.
TR7125: Polyterpene (softening point: 125°C, Tg: 73°C) available from Arizona Chemical

### <Low temperature plasticizer>

TOP: Tris(2-ethylhexyl) phosphate (phosphoric acid ester, freezing point: -70°C or lower, flash point: 204°C, SP value: 8.2, Mw: 435) available from Daihachi Chemical Industry Co., Ltd.
DOS: Bis(2-ethylhexyl) sebacate (aliphatic dibasic acid ester, freezing point: -62°C, flash point: 222°C, SP value: 8.5, Mw: 427) available from Daihachi Chemical Industry Co., Ltd.
DOP: Bis(2-ethylhexyl) phthalate (phthalic acid ester, freezing point: -51°C, flash point: 218°C, SP value: 8.9, Mw: 391) available from Daihachi Chemical Industry Co., Ltd.
TBP: Tributyl phosphate (phosphoric acid ester, freezing point: -80°C, flash point: 160°C, SP value: 8.6, Mw: 266) available from Daihachi Chemical Industry Co., Ltd.
BBP: Butyl benzyl phthalate (phosphoric acid ester, freezing point: -40°C, flash point: 213°C, SP value: 9.8, Mw: 312) available from Daihachi Chemical Industry Co., Ltd.
TEP: Triethyl phosphate (phosphoric acid ester, freezing point: -56°C, flash point: 111°C, SP value: 8.7, Mw: 182) available from Daihachi Chemical Industry Co., Ltd.
DEP: Diethyl phthalate (phthalic acid ester, freezing point: -5°C, flash point: 162°C, SP value: 9.9, Mw: 222) available from Daihachi Chemical Industry Co., Ltd.
BXA-N: Bis[2-(2-butoxyethoxy)ethyl] adipate (aliphatic dibasic acid ester, freezing point: -19°C, flash point: 207°C, SP value: 8.70, Mw: 435) available from Daihachi Chemical Industry Co., Ltd.
BXA-R: Mixture of bis[2-(2-butoxyethoxy)ethyl] adipate and diethylene glycol monobutyl ether (about 85:about 15 (mass ratio), freezing point: -24°C, flash point: 145°C, SP value: 8.70, Mw: 394) available from Daihachi Chemical Industry Co., Ltd.

### <Process oil>

TDAE oil: Vivatec 500 available from H&R

### <Auxiliary agent>

Wax: Ozoace 0355 available from Nippon Seiro Co., Ltd.
6PPD: Antigene 6C (N-(1,3-dimethylbutyl)-N'-phenyl-p-phenylenediamine) available from Sumitomo Chemical Co., Ltd.
TMQ: NOCRAC 224 (2,2,4-trimethyl-1,2-dihydroquinoline polymer) available from Ouchi Shinko Chemical Industrial Co., Ltd.
Stearic acid: Stearic acid "TSUBAKI" available from NOF Corporation
Zinc oxide: Ginrei R available from Toho Zinc Co., Ltd.
Si69: Silane coupling agent available from Evonik
NXT: Silane coupling agent ((C₂H₅O)₃Si-C₃H₆-S-CO-C₇H₁₅) available from Momentive Performance Materials Inc.

### <Vulcanizing agent>

Five percent oil-containing powdered sulfur: HK-200-5 available from Hosoi Chemical Industry Co., Ltd.
DPG: NOCCELER D (1,3-diphenylguanidine) available from Ouchi Shinko Chemical Industrial Co., Ltd.
TBBS: NOCCELER NS-G (N-tert-butyl-2-benzothiazolyl sulfenamide) available from Ouchi Shinko Chemical Industrial Co., Ltd.
TBZTD: Perkacit TBZTD (tetrabenzyl thiuram disulfide) available from Flexsys

### (Examples, Reference Examples and Comparative Examples)

According to the formulations and kneading conditions shown in Tables 1 and 2, the whole amounts of the rubber component, aluminum hydroxide (inorganic filler), carbon black, silica, and other agents such as resins and a softener, excluding vulcanizing agents, were kneaded for five minutes at a discharge temperature of 160°C (X-kneading), with the exception that in Example 13, Comparative Example 14, and Example 27 in which TEP, TBP, or BXA-R was used as a low temperature plasticizer, kneading was carried out for five minutes at a discharge temperature of 145°C to prevent ignition.

To the kneaded mixture were then added sulfur and vulcanization accelerators, followed by kneading for four minutes using an open roll mill (final kneading) to give an unvulcanized rubber composition. At this time, the maximum rubber temperature was 95°C.

The unvulcanized rubber composition was pressed and heated at 170°C for 12 minutes to give a vulcanized rubber composition.

Separately, the unvulcanized rubber composition was shaped into a tread, assembled with other tire components on a tire building machine, and press-vulcanized at 170°C for 12 minutes to prepare a test tire (tire size: 245/40R18).

The unvulcanized rubber compositions and test tires thus prepared were evaluated as follows. Tables 1 and 2 show the results.

### (Wet grip performance)

The test tires were mounted on a front-engine, rear-wheel-drive car with a displacement of 2000 cc made in Japan. A test driver drove the car 10 laps around a test track with wet asphalt road conditions and then evaluated the control stability during steering. The results are expressed as an index, with Comparative Example 1 set equal to 100. A higher index indicates better wet grip performance. Tires with an index of 110 or higher have good wet grip performance. The high-level target of the index is 115 or higher.

### (Abrasion resistance)

The test tires were mounted on a front-engine, rear-wheel-drive car with a displacement of 2000 cc made in Japan. A driver drove the car in a test track with dry asphalt road conditions. Then, the remaining groove depth in the tire tread rubber (initial depth: 8.0 mm) was measured to evaluate abrasion resistance. A larger average depth of remaining main grooves indicates better abrasion resistance. The remaining groove depths are expressed as an index, with Comparative Example 1 set equal to 100. A higher index indicates better abrasion resistance.

### (Tensile test)

No. 3 dumbbell-shaped test pieces prepared from the vulcanized rubber composition were subjected to a tensile test at 23°C in accordance with JIS K 6251 "Rubber, vulcanized or thermoplastic -- Determination of tensile stress-strain properties" to measure the elongation at break EB (%). The EB values are expressed as an index, with Comparative Example 1 set equal to 100. A higher EB indicates better tensile properties.

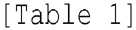

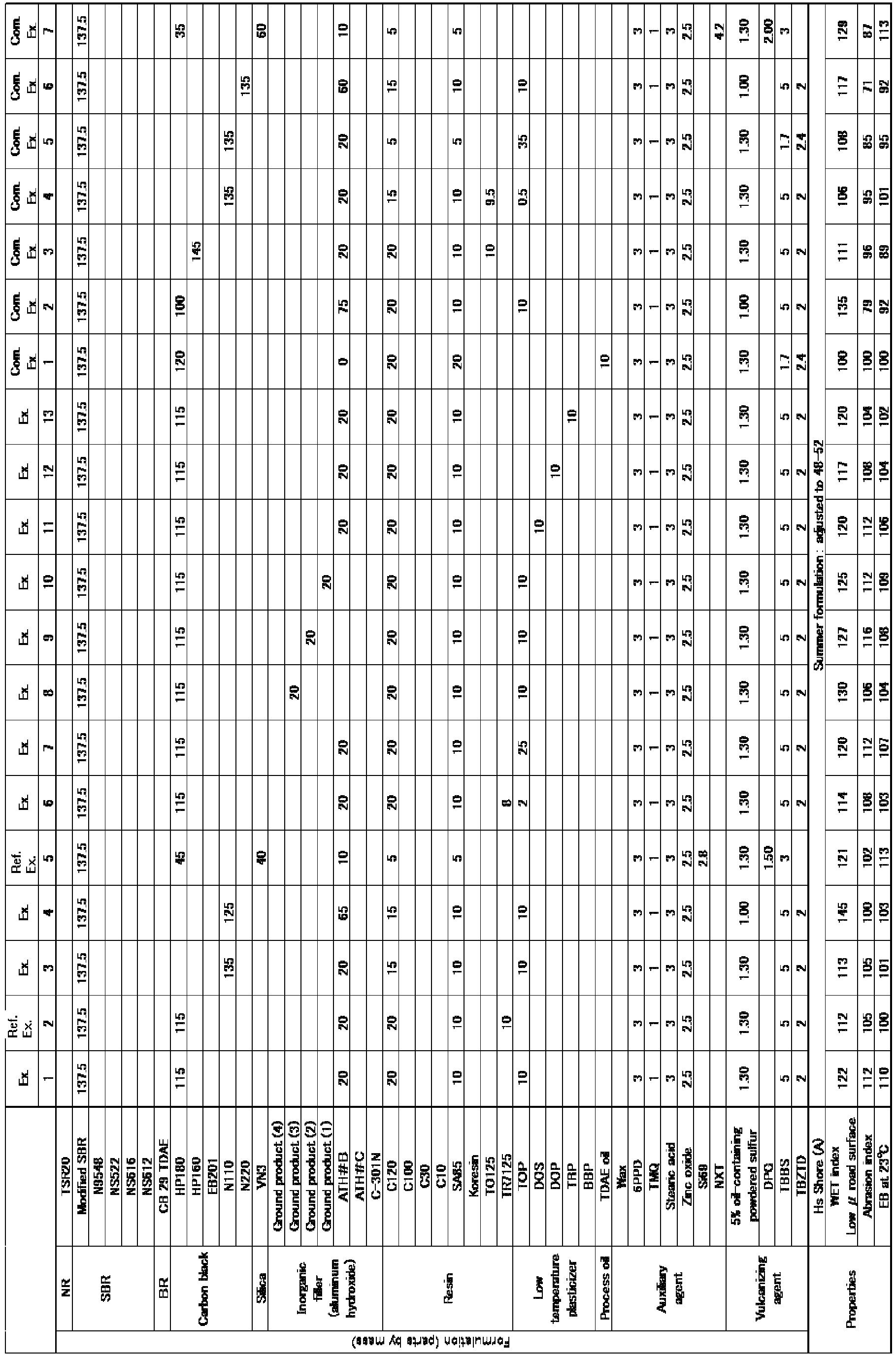

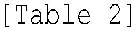

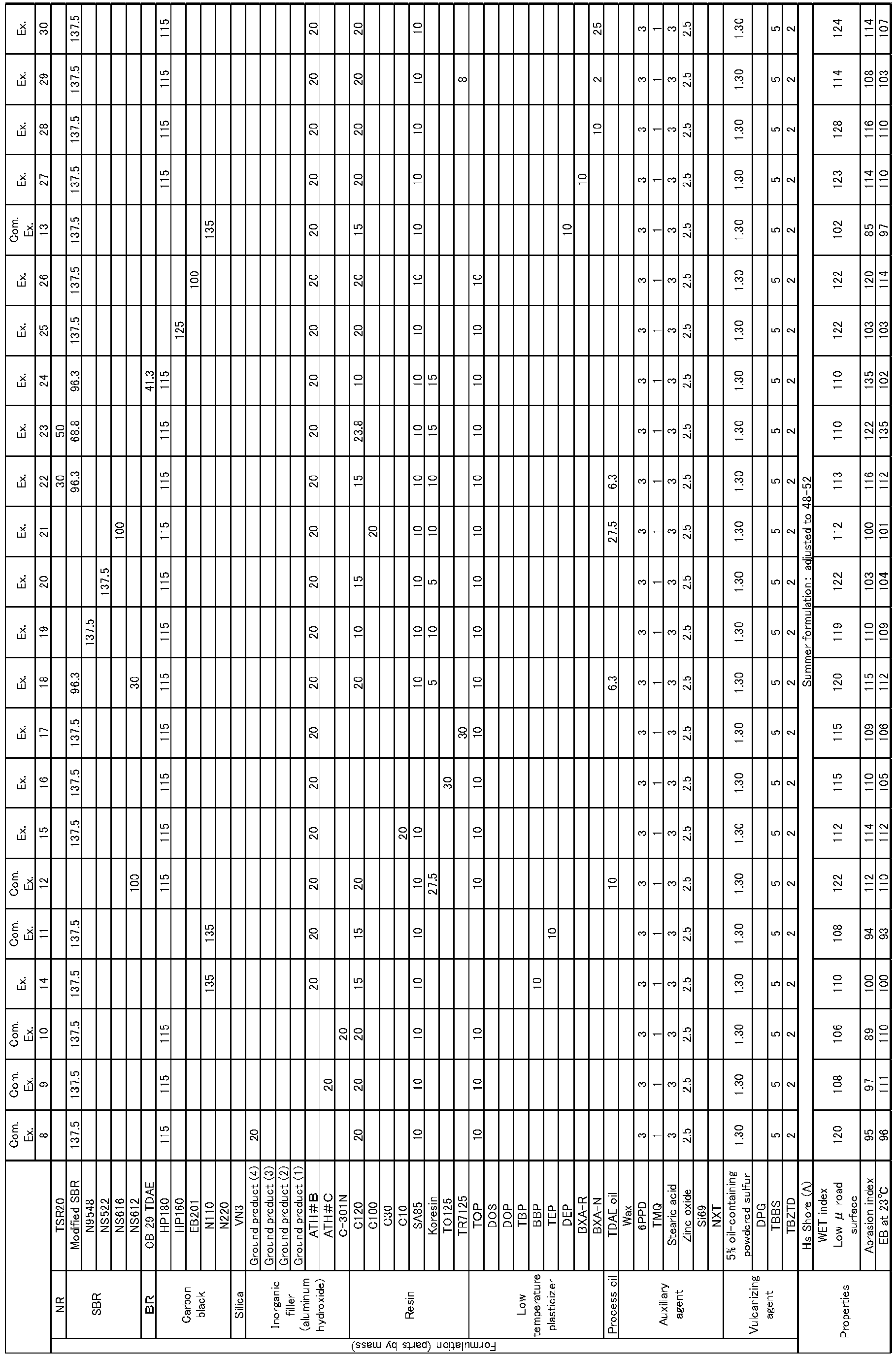

The evaluation results in Tables 1 and 2 demonstrate that the balance of wet grip performance, abrasion resistance, and abrasion appearance after abrasion was significantly improved in examples in which a specific rubber component was used in combination with a predetermined inorganic filler having a predetermined BET value, and a low temperature plasticizer having a specific freezing point, and optionally with a fine particle carbon black having a specific BET value.

## Claims

1. A rubber composition, comprising:
a rubber component including a diene rubber;
an inorganic filler having a BET value of 10 to 120 m²/g, the inorganic filler being formed of a compound represented by formula below, magnesium sulfate, or silicon carbide; and
a plasticizer having a freezing point of -10°C or lower, wherein the plasticizer includes no process oil,
the rubber composition comprising, per 100 parts by mass of the rubber component, 1 to 70 parts by mass of the inorganic filler and 1 to 30 parts by mass of the plasticizer,
mM·xSiO_{y}·zH₂O
wherein M represents at least one metal selected from the group consisting of Al, Mg, Ti, Ca, and Zr, or an oxide or hydroxide of the metal; m represents an integer of 1 to 5; x represents an integer of 0 to 10; y represents an integer of 2 to 5; and z represents an integer of 0 to 10.

2. The rubber composition according to claim 1,
wherein the inorganic filler is aluminum hydroxide.

3. The rubber composition according to claim 1 or 2,
wherein the rubber composition further comprises a fine particle carbon black having a BET value of 151 m²/g or more.

4. The rubber composition according to any one of claims 1 to 3,
wherein the plasticizer has a weight average molecular weight of 400 or more and a flash point of 200°C or higher.

5. The rubber composition according to any one of claims 1 to 4,
wherein the plasticizer is an aliphatic polybasic acid ester.

6. The rubber composition according to any one of claims 1 to 5,
wherein the rubber component includes 70% by mass or more of a styrene-butadiene rubber having a styrene content of 15% to 60%.

7. The rubber composition according to any one of claims 1 to 6, which is for use in tire treads.

8. A pneumatic tire, comprising a tread formed from the rubber composition according to any one of claims 1 to 7.

## Patentansprüche

1. Kautschukzusammensetzung, die umfasst:
eine Kautschukkomponente, die einen Dienkautschuk enthält;
einen anorganischen Füllstoff mit einem BET-Wert von 10 bis 120 m²/g, wobei der anorganische Füllstoff aus einer durch die folgende Formel dargestellten Verbindung, Magnesiumsulfat oder Siliciumcarbid gebildet ist; und
einen Weichmacher mit einem Gefrierpunkt von -10°C oder niedriger, wobei der Weichmacher kein Prozessöl enthält,
wobei die Kautschukzusammensetzung pro 100 Massenteile der Kautschukkomponente 1 bis 70 Massenteile des anorganischen Füllstoffs und 1 bis 30 Massenteile des Weichmachers umfasst,
mM·xSiO_{y}·zH₂O
wobei M mindestens ein Metall ausgewählt aus der Gruppe bestehend aus Al, Mg, Ti, Ca und Zr, oder ein Oxid oder Hydroxid des Metalls darstellt; m eine ganze Zahl von 1 bis 5 darstellt; x eine ganze Zahl von 0 bis 10 darstellt; y eine ganze Zahl von 2 bis 5 darstellt; und z eine ganze Zahl von 0 bis 10 darstellt.

2. Kautschukzusammensetzung nach Anspruch 1,
wobei der anorganische Füllstoff Aluminiumhydroxid ist.

3. Kautschukzusammensetzung nach Anspruch 1 oder 2,
wobei die Kautschukzusammensetzung ferner einen Feinteilchenruß mit einem BET-Wert von 151 m²/g oder mehr umfasst.

4. Kautschukzusammensetzung nach einem der Ansprüche 1 bis 3,
wobei der Weichmacher ein gewichtsgemitteltes Molekulargewicht von 400 oder mehr und einen Flammpunkt von 200°C oder höher aufweist.

5. Kautschukzusammensetzung nach einem der Ansprüche 1 bis 4,
wobei der Weichmacher ein aliphatischer mehrbasiger Säureester ist.

6. Kautschukzusammensetzung nach einem der Ansprüche 1 bis 5,
wobei die Kautschukkomponente 70 Massen-% oder mehr eines Styrol-Butadien-Kautschuks mit einem Styrolgehalt von 15 bis 60% enthält.

7. Kautschukzusammensetzung nach einem der Ansprüche 1 bis 6, die zur Verwendung in Reifenlaufflächen bestimmt ist.

8. Luftreifen, umfassend eine Lauffläche, die aus der Kautschukzusammensetzung nach einem der Ansprüche 1 bis 7 gebildet ist, umfasst.

## Revendications

1. Composition de caoutchouc, comprenant :
un composant de type caoutchouc comprenant un caoutchouc de diène ;
une charge inorganique ayant une valeur BET de 10 à 120 m²/g, la charge inorganique étant formée d'un composé représenté par la formule ci-dessous, de sulfate de magnésium, ou de carbure de silicium ; et
un plastifiant ayant un point de congélation de -10 °C ou moins, le plastifiant ne comprenant pas d'huile de traitement,
la composition de caoutchouc comprenant, par 100 parties en masse du composant de type caoutchouc, 1 à 70 parties en masse de la charge inorganique et 1 à 30 parties en masse du plastifiant,
mM·xSiO_{y}·zH₂O
M représentant au moins un métal choisi dans le groupe constitué par AI, Mg, Ti, Ca, et Zr, ou un oxyde ou hydroxyde du métal ; m représentant un entier de 1 à 5 ; x représentant un entier de 0 à 10 ; y représentant un entier de 2 à 5 ; et z représentant un entier de 0 à 10.

2. Composition de caoutchouc selon la revendication 1, la charge inorganique étant l'hydroxyde d'aluminium.

3. Composition de caoutchouc selon la revendication 1 ou 2, la composition de caoutchouc comprenant en outre un noir de carbone à particules fines ayant une valeur BET de 151 m²/g ou plus.

4. Composition de caoutchouc selon l'une quelconque des revendications 1 à 3, le plastifiant ayant un poids moléculaire moyen en poids de 400 ou plus et un point éclair de 200 °C ou plus.

5. Composition de caoutchouc selon l'une quelconque des revendications 1 à 4, le plastifiant étant un ester d'acide polybasique aliphatique.

6. Composition de caoutchouc selon l'une quelconque des revendications 1 à 5, le composant de type caoutchouc comprenant 70 % en masse ou plus d'un caoutchouc de styrènebutadiène ayant une teneur en styrène de 15 % à 60 %.

7. Composition de caoutchouc selon l'une quelconque des revendications 1 à 6, qui est pour une utilisation dans des bandes de roulement de pneus.

8. Pneumatique, comprenant une bande de roulement formée à partir de la composition de caoutchouc selon l'une quelconque des revendications 1 à 7.
